# EUROPÄISCHE PATENTANMELDUNG

(11) **EP 1 291 201 A2**
(43) Veröffentlichungstag der Anmeldung: **12.03.2003**
(21) Anmeldenummer: 02018305.9
(22) Anmeldetag: 14.08.2002
(51) Int. Cl.: B60C 27/06

(54) **Gleitschutzvorrichtung für Luftreifen aufweisende Kraftfahrzeuge**

(30) Priorität: 06.09.2001 AT 14042001
(71) Anmelder: Kahlbacher, Anton, 3363 Amstetten-Neufurth (AT)
(72) Erfinder: Kahlbacher, Anton, 3363 Amstetten-Neufurth (AT)
(74) Vertreter: Hefel, Herbert, Dipl.-Ing.

(57) **Zusammenfassung**

Ein Gleitschutzvorrichtung für Luftreifen aufweisende Kraftfahrzeuge weist zumindest zwei im montieren Zustand neben der Radfelge angeordnete und winkelig zueinander stehende Arme (1, 2) auf, deren freie Enden mit über dem Reifenumfang angeordneten Gleitschutzmitteln (5) in Verbindung stehen und die über eine Befestigungseinrichtung (9, 55) am Rad befestigbar sind. Die Befestigungseinrichtung weist eine an mindestens zwei Radschrauben bzw. Radmuttern (8) befestigbare, im wesentlichen flach ausgebildete Adapterscheibe (9) sowie ein an der Adapterscheibe (9) ankuppelbares Kuppelteil (55) auf und in der Adapterscheibe (9) sind einerseits zumindest eine Öffnung (22), in die ein am Kuppelteil (55) festgelegtes Riegelteil (23) einführbar und darin festlegbar ist, und andererseits im wesentlichen in der gleichen Ebene wie die mindestens eine Öffnung (22) liegende und in Umfangsrichtung voneinander beabstandete Montagelöcher (10) angeordnet, über die die Adapterscheibe (9) mittels Klemmköpfen (11) an den Radschrauben bzw. Radmuttern (8) befestigbar ist.

## Beschreibung

Die Erfindung betrifft eine Gleitschutzvorrichtung für Luftreifen aufweisende Kraftfahrzeuge, welche zumindest zwei im montieren Zustand heben der Radfelge angeordnete und winkelig zueinander stehende Arme aufweist, deren freie Enden mit über dem Reifenumfang angeordneten Gleitschutzmitteln in Verbindung stehen und die über eine Befestigungseinrichtung am Rad befestigbar sind.

Eine Gleitschutzvorrichtung dieser Art ist aus der AT-PS 385 243 bekannt. Diese weist ebenfalls eine Halterung auf, welche sich im montierten Zustand neben der Radaußenseite befindet und zwei winkelig zueinander stehende Arme umfaßt, deren freie Enden mit über dem Reifenumfang angeordneten Gleitschutzmitteln in Form von Ketten in Verbindung stehen. Die Halterung ist über eine Kuppeleinrichtung am Rad gehaltert und gegenüber diesem verspannt. Bei dieser Kuppeleinrichtung sind Gummiriemen vorgesehen, die in die Felge des Rades eingehakt werden. Nachteilig daran ist, daß nicht jede Felge für das Einhaken von Gummiriemen geeignet ist und daß diese Befestigung am Rad weiters wenig zuverlässig ist.

Eine Gleitschutzvorrichtung der eingangs genannten Art, bei der ein an einer Radmutter befestigbarer Klemmkopf zur Verbindung der Kuppeleinrichtung mit dem Rad vorgesehen ist, ist weiters durch öffentliche Vorbenutzung bekannt. Bei dieser Gleitschutzvorrichtung steht der Klemmkopf mit den Armen der Halterung über einen Gummistrang in Verbindung, dessen freie Enden in Buchsen gelagert sind. Eine dieser Buchsen ist an den Armen der Halterung befestigt und die andere steht über ein Verbindungsstück mit dem Klemmkopf in Verbindung. Der Gummistrang übt einerseits eine gegen das Rad gerichtete Spannkraft auf die Halterung aus und nimmt weiters Verschiebungen zwischen der Halterung und dem Klemmkopf während der Umdrehung des Rades auf, welche durch eine unvollständige Zentrierung der montierten Halterung sowie insbesondere durch die Walkbewegung der Luftreifen beim Abrollen des Rades bewirkt werden. Nachteilig an dieser Einrichtung ist die Verbindungsstelle zwischen dem Gummistrang und den mit dieser befestigten Haltebuchsen, die naturgemäß eine Schwachstelle darstellt. Durch die bei der Verwendung der Gleitschutzvorrichtung auftretenden Kräfte kann es im Laufe der Zeit zu einer Lockerung und einem Ausreißen des Gummistrangs kommen. Weiters kommt es durch unzentrisch wirkende Kräfte nach einer relativ kurzen Betriebszeit zu einem Lösen des Klemmkopfes.

Eine ähnliche Gleitschutzvorrichtung, deren Halterung ein Befestigungselement zur Verbindung mit einer Radschraube aufweist, ist weiters aus der DE 38 44 494 A1 bekannt.

Ein Klemmkopf zur Befestigung einer Gleitschutzvorrichtung an einer Radschraube ist weiters beispielsweise auch aus der DE 39 10 669 A1 bekannt. Hier ist die Befestigung an der Radschraube außermittig sowie unwuchtig und durch die einseitige Belastung löst sich die Schneekette auch leichter aus der Verankerung.

Die Befestigung einer Gleitschutzvorrichtung an eine Fahrzeugrad mittels auf den Radschrauben festgelegten Klemmköpfen ist aus der EP 0 285 903 A1 bekannt.

Schließlich ist hier die prioritätsältere, nicht vorveröffentlichte europäische Patentanmeldung 0110 9845.6 zu nennen. Die Befestigungseinrichtung der Gleitschutzvorrichtung umfaßt hier eine mittels Klemmköpfen an mindestens zwei Radmuttern bzw. Radschrauben befestigtes Adapterteil, das zu diesem Zweck mit Montagelöchern versehen ist. Am Adapterteil ist ein Befestigungssteg angeordnet, der zumindest eine Öffnung aufweist, in die ein Riegelteil der Befestigungseinrichtung einführbar ist und darin festlegbar ist. Der Befestigungssteg, in dem die Öffnungen für die Riegelteile vorgesehen sind, wird bei dieser Einrichtung durch ein separates brückenartiges Teil oder es ist ein abgekröpftes Adapterteil vorgesehen, das eine Basisplatte und einen vom abgekröpften Bereich gebildeten Befestigungssteg umfaßt. Die im Adapterteil vorgesehenen Montagelöcher zur Befestigung des Adapterteils an den Radmuttern mittels der Klemmköpfe und die im Befestigungssteg vorgesehenen Öffnungen zum Einführen der Riegelteile liegen dabei in verschiedenen Ebenen.

Aufgabe der Erfindung ist es eine Gleitschutzvorrichtung der eingangs genannten Art bereitzustellen, welche einfach montierbar ist und dabei eine zuverlässige Befestigung der Gleitschutzmittel am Reifenumfang ermöglicht. Erfindungsgemäß gelingt dies durch eine Gleitschutzvorrichtung mit den Merkmalen des Patentanspruchs 1.

Bei einer erfindungsgemäßen Gleitschutzvorrichtung wird eine sichere Befestigung der Befestigungseinrichtung an den Radmuttern bzw. Radschrauben durch die Adapterscheibe ermöglicht. Falls die Gleitschutzmittel nicht benötigt werden und vom Reifenumfang abgenommen werden sollen, kann die Adapterscheibe an den Radmuttern verbleiben. Die Adapterscheibe weist dabei einen sehr einfachen Aufbau auf und ist kostengünstig herstellbar. Durch die flache Ausbildung können auch Arbeitsschritte zur Abkantung eingespart werden. Eine einzelne Adapterscheibe kann so ausgebildet werden, daß sie für unterschiedliche Felgentypen, beispielsweise Vier-Loch-Felgen und Fünf-Loch-Felgen einsetzbar ist. Möglich ist es auch, für unterschiedliche Felgentypen unterschiedlich ausgebildete Adapterscheiben bereitzustellen, insbesondere hinsichtlich der Montagelöcher und/oder hinsichtlich der Größe der Adapterscheibe, die alle in Verbindung mit dem gleichen Kuppelteil einsetzbar sind.

In einem vorteilhaften Ausführungsbeispiel sind die Gleitschutzmittel als umfangsgeschlossene, endlose Kettenstränge ausgebildet und stehen mit den Armen über Haltelaschen in Verbindung, wobei eine Kettenstrang jeweils in einer Vertiefung über eine jeweilige Haltelasche geführt ist. Zur Befestigung der Kettenstränge in den Vertiefungen der Haltelaschen sind in den Seitenwänden dieser Vertiefungen günstigerweise Bohrungen vorgesehen, von denen Kettenbefestigungsbolzen aufgenommen werden, die im wesentlichen parallel zur Reifenoberfläche liegen und jeweils ein Kettenglied durchsetzen.

Vorteilhaft ist es weiters, wenn die Kuppeleinrichtung einen zentralen Bolzen umfaßt, auf dem die Arme der Halterung der Gleitschutzvorrichtung gelagert sind und der über kugelgelenkartige Verbindungen einerseits mit den Armen, andererseits mit dem mindestens einen Regelteil in Verbindung steht. Es können dadurch die durch den Walkvorgang des Reifens beim Abrollen auftauchenden Bewegungen aufgenommen werden, wodurch eine lange Lebensdauer unter Vermeidung von Materialermüdungsbrüchen erreicht werden kann.

Weitere Vorteile und Einzelheiten der Erfindung werden im folgenden anhand der beiliegenden Zeichnung erläutert, welche ein Ausführungsbeispiel der Erfindung darstellt. In der Zeichnung zeigen:
- Fig. 1: eine Seitenansicht eines Rades mit daran angelegter Gleitschutzvorrichtung;

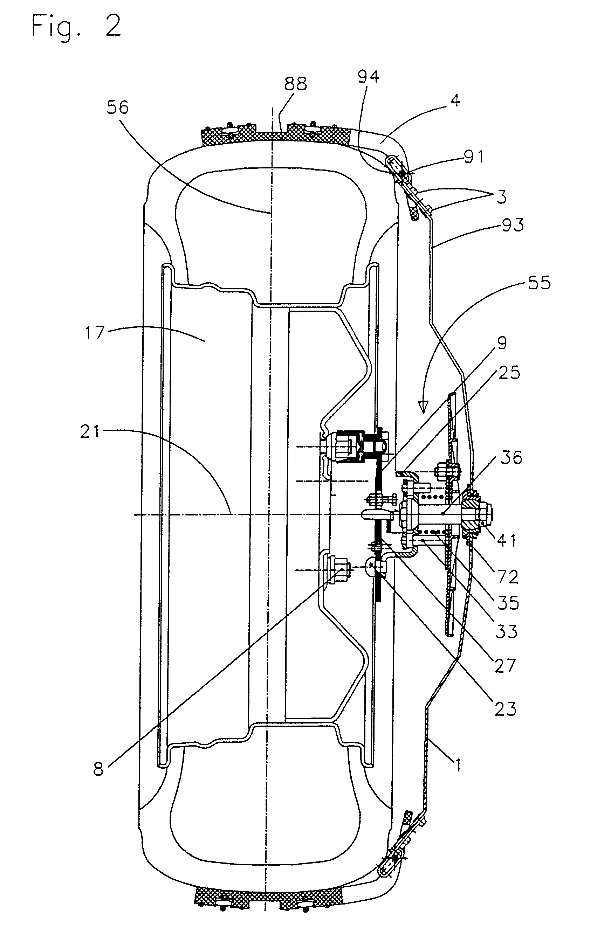

- Fig. 2: einen Schnitt senkrecht zur Zeichenebene von Fig. 1;
- Fig. 3: eine vergrößerte Darstellung der an den Radmuttern bzw. Radschrauben befestigten Adapterscheibe (Schnittlinie AA in Fig. 4);
- Fig. 4: eine Ansicht der Adapterscheibe mit in zwei Montagelöchern angeordneten Klemmköpfen von unten (Blickrichtung B in Fig. 3) teilweise aufgerissen;
- Fig. 5: eine vergrößerte Darstellung des Kuppelteils in einem Schnitt entsprechend Fig. 2;
- Fig. 6: eine Ansicht des Kuppelteils von unten (Blickrichtung C in Fig. 5); teilweise aufgerissen;
- Fig. 7: eine Ansicht einer Haltelasche (Blickrichtung D in Fig. 1), wobei die Kettenstränge der Übersichtlichkeit halber nur in einem neben der Haltelasche liegenden Bereich schematisch dargestellt sind;
- Fig. 8: einen Schnitt entlang der Linie EE von Fig. 7;

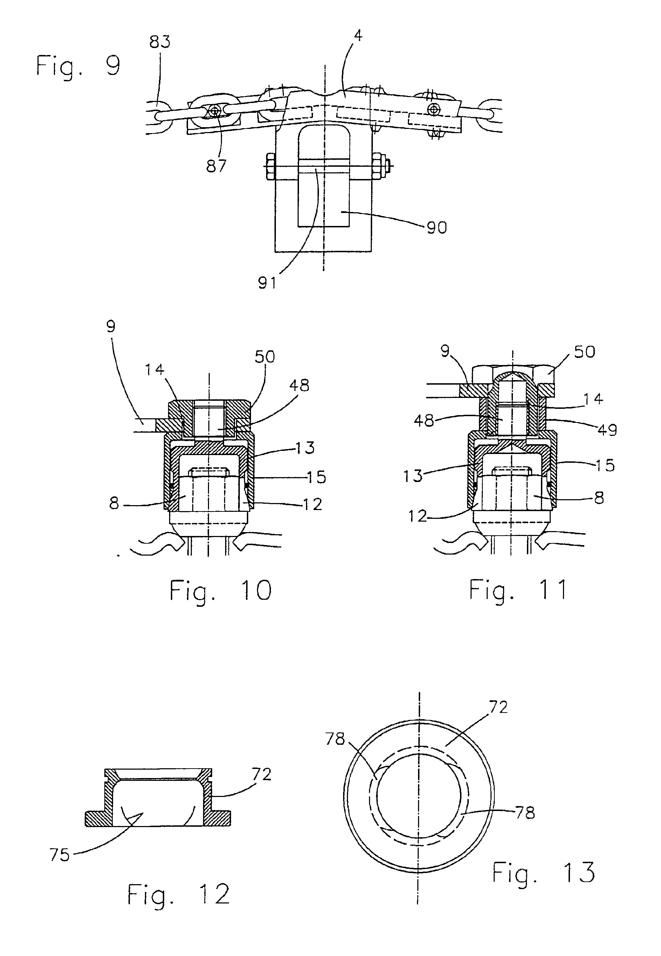

- Fig. 9: eine Seitenansicht der Haltelasche (Blickrichtung F in Fig. 8), teilweise aufgerissen;
- Fig. 10: und 11 Längsmittelschnitte durch Klemmköpfe;
- Fig. 12: das Lagerteil mit der Kugelgelenkspfanne im Längsschnitt und
- Fig. 13: eine Ansicht auf das Lagerteil von Fig. 12 von unten.

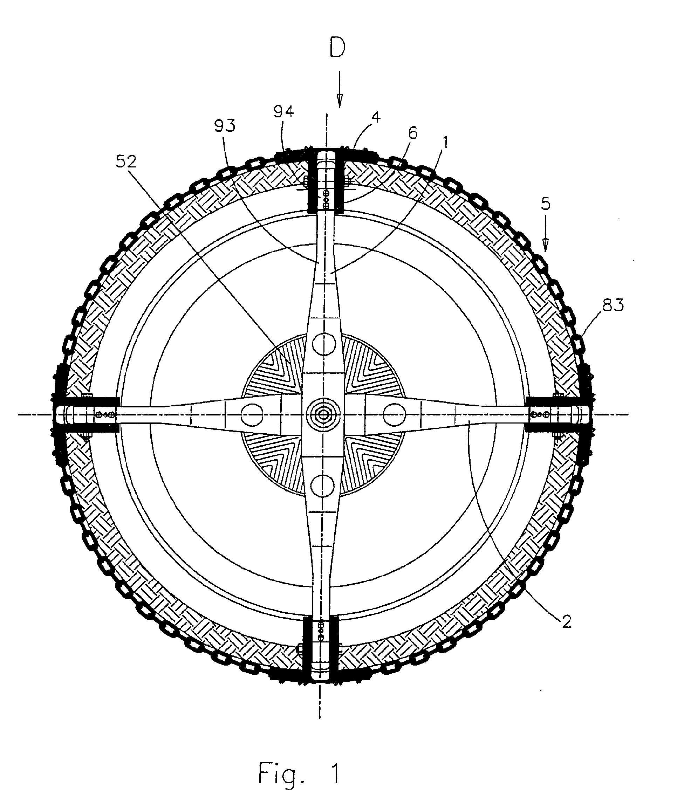

Eine Gleitschutzvorrichtung in Form einer sogenannten selbstanlegenden Schneekette weist, wie aus Fig. 1 ersichtlich ist, zwei im montierten Zustand der Schneekette neben der Radaußenseite liegende, sich kreuzende Arme 1, 2 auf. Diese sind um eine zentrale Achse gegeneinander verschwenkbar gelagert, um eine platzsparende Lagerung der Schneekette zu ermöglichen. Durch eine federelastische Ausbildung der Arme 1, 2 kann eine gegen den Reifen gerichtete Kraft der Enden der Arme bei montierter Schneekette erreicht werden. Die Arme 1, 2 können jeweils mehrteilig ausgebildet sein, wobei die Teile 93, 94 über Schrauben 3 oder Nieten miteinander verbunden sind. Durch jeweils mehrere Bohrlöcher in den übereinanderlappenden Abschnitten der Teile der Arme kann somit eine Verstellmöglichkeit der Armlänge für unterschiedliche Radgrößen bereitgestellt werden.

Die freien Enden der Arme 1, 2 stehen über, vorzugsweise aus Kunststoff bestehenden Haltelaschen 4 mit Gleitschutzmitteln 5 in Verbindung, die hier als Endlosketten ausgebildet sind. Die Haltelaschen 4 sind plattenförmig ausgebildet und jeweils über einen Armfortsatz 6 mit den freien Enden der Arme 1, 2 verbunden, wobei sie gegenüber den freien Enden der Arme um eine Achse verschwenkbar sind, die parallel zur fälligen Mittelebene 56 liegt. Zur Halterung der Kettenstränge 83 weisen die Haltelaschen für jeden Kettenstrang jeweils eine Vertiefung 84 auf, in der der Kettenstrang über die Haltelasche 4 geführt ist. In den Seitenwänden 85 der Vertiefungen 84 sind Bohrungen 86 angeordnet, von denen Kettenbefestigungsbolzen 87 aufgenommen werden, die parallel zur Lauffläche 88 des Reifens liegen und jeweils ein Kettenglied durchsetzen. In dem Abschnitt der Haltelasche 4, in dem sie auf der Lauffläche 88 des Reifens aufliegt, sind auf der der Lauffläche abgewandten Außenseite noppenartige Erhebungen 89 vorgesehen, um das Rutschverhalten der Haltelaschen 4 auf Schnee und Eis zu verbessern. Günstigerweise sind auch an den Unterseiten der Haltelaschen 4 noppenartige Erhebungen 92 vorgesehen, um einem Verrutschen gegenüber der Lauffläche 88 entgegenzuwirken. Um auch im Bereich der Haltelaschen wirksam sein zu können, stehen die in der Vertiefung 84 liegenden Kettenglieder der Kettenstränge über die Oberseiten der Haltelaschen vor.

Die Haltelaschen sind mit den freien Enden der Arme, die ösenförmig umgebogen sind und in eine Ausnehmung 90 des Armfortsatzes 6 der Haltelasche ragen, durch einen die Ausnehmung überbrückenden Querbolzen 91 verbunden.

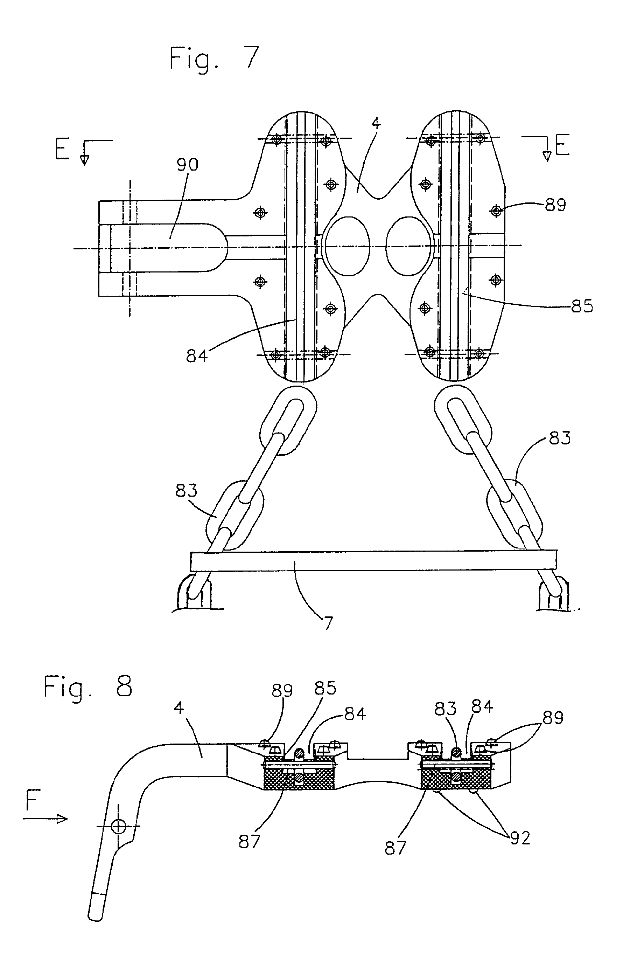

Zur Beabstandung der Kettenstränge 83 in den zwischen den Haltelaschen 4 liegenden Bereichen sind Abstandsteile 7 vorgesehen. Diese Abstandsteile 7 halten die Kettenstränge in einer Distanz zueinander, die größer ist als der Abstand zwischen den Vertiefungen 84 in den Haltelaschen. Die Kettenstränge laufen daher in den an die Haltelaschen angrenzenden Bereichen schräg nach außen, wie dies in Fig. 7 übertrieben dargestellt ist, wodurch eine Stabilisierung der Kettenstränge gegenüber seitlichen Verschiebungen erreicht wird.

Obwohl es sich bei der gezeigten Ausbildung der Haltelaschen um eine vorteilhafte Ausführungsform handelt, sind andere Ausbildungen denkbar und möglich, die auch entsprechend den in der Beschreibungseinleitung genannten Stand der Technik ausgeführt sein können. Anstelle von Endlosketten könnten auch einzelne Kettenstücke vorgesehen sein, die jeweils zwischen zwei Haltelaschen verlaufen und mit ihren Enden an diesen befestigt sind.

Die Arme 1, 2 sind über eine Befestigungseinrichtung an den Radschrauben oder Radmuttern 8 befestigbar, wie dies im folgenden genauer erläutert wird. Die Befestigungseinrichtung umfaßt eine an mindestens zwei Radschrauben bzw. Radmuttern befestigbare, im wesentlichen flach ausgebildete Adapterscheibe 9, deren Grundkörper einstückig ausgebildet ist. Zur Befestigung der Adapterscheibe 9 sind Klemmköpfe 11 vorgesehen, die Montagelöcher 10 in der eine kreisförmige Umfangskontur aufweisenden Adapterscheibe 9 durchsetzen. Die montierte Adapterscheibe überspannt den Felgenmittelpunkt, wobei die zentrale Längsachse 21 der Felge den Mittelpunkt der Adapterscheibe 9 durchsetzt.

Eine mögliche Ausbildungsform eines Klemmkopfes ist in den Fig. 10 und 11 dargestellt. Ein solcher Klemmkopf 11 umfaßt eine Klemmbuchse 13, an deren Vorderseite fingerartige Klemmfortsätze 12 mit einer konisch oder keilförmig nach außen laufenden Außenfläche angeordnet sind. Die Klemmfortsätze 12 weisen an ihren Innenwänden eingedrehte Rillen auf, um einem Abrutschen vom Kopf der Radschraube oder der Radmutter 8 zu vermeiden. An den Klemmfortsätzen liegt eine die Klemmbuchse 13 außen umgebende Klemmhülse 15 an. An der Rückseite der Klemmbuchse ist ein Gewindefortsatz 48 mit einem Außengewinde festgelegt, auf das eine Spannhülse 14 mit einem Innengewinde aufschraubbar ist, die einen Schraubkopf 50 aufweist. Durch Einschrauben der Spannhülse 14 wird die Klemmhülse 15 nach vorne und gegen die konische Außenfläche der Klemmfortsätze 12 verschoben, so daß diese nach innen gedrückt werden. Die Adapterscheibe 9 wird hierbei direkt zwischen die Rückseite der Klemmhülse 15 und den Schraubkopf 50 der Spannhülse 14 eingelegt (Fig. 10) oder es ist zusätzlich eine zwischen der Adapterscheibe 9 und der Rückseite der Klemmhülse 15, welche hierzu mit einem nach innen reichenden Flansch 51 versehen ist, eine die Spannhülse umgebende Distanzhülse 49 eingelegt (Fig. 11). Durch einen solchen Klemmkopf kann in einfacher Weise ein Modulsystem für unterschiedliche Felgen und Radmuttern bereitgestellt werden.

Zur Befestigung der Adapterscheibe 9 an den Radmuttern 8 mittels der Klemmköpfe 11 sind in der Adapterscheibe 9 in Umfangsrichtung voneinander beabstandete Montagelöcher 10 angeordnet. Beim gezeigten Ausführungsbeispiel sind sechs solche Montagelöcher 10 vorgesehen, die teilweise als Langlöcher ausgebildet sind. Eine solche Adapterscheibe kann dadurch mit unterschiedlichen Vier-Loch-Felgen und Fünf-Loch-Felgen eingesetzt werden. Prinzipiell denkbar und möglich wäre es auch an jeweilige Felgentypen jeweils angepaßte Adapterscheiben vorzusehen. Bevorzugt ist aber eine im Zusammenhang mit unterschiedlichen Felgen einsetzbare Adapterscheibe, welche mindestens fünf, vorzugsweise mindestens sechs, in Umfangrichtung voneinander beabstandete Montagelöcher 10 aufweist.

In der Adapterscheibe 9 sind weiters zwei symmetrisch zur zentralen Längsachse 21 der Radfelge 17 liegenden, birnenförmige Öffnungen 22 vorgesehen. Diese Öffnungen 22, deren Achsen parallel zur Längsachse 21 der Felge liegen, liegen in der gleichen Ebene wie die Montagelöcher 10, deren Achsen ebenfalls parallel zur Längsachse 21 der Felge liegen. In diesen Öffnungen 22 sind pilzförmige Riegelteile 23 festlegbar, die an einem Kuppelteil 55 der Befestigungseinrichtung festgelegt sind. Das Kuppelteil 55 umfaßt hierbei ein Zwischenstück 25, das einen plattenförmigen Abschnitt 32, der im mit der Adapterscheibe verbundenen Zustand des Kuppelteils parallel zur Adapterscheibe ausgerichtet ist und zwei seitlich von diesem ausgehende Arme 26 auf, die senkrecht zum plattenförmigen Abschnitt 32 stehen und in Richtung zur Radfelge 17 ausgerichtet sind. Die freien Enden dieser Arme 26 sind nach außen abgekröpft und an diesen Abkröpfungen sind die Riegelteile 23 angeordnet.

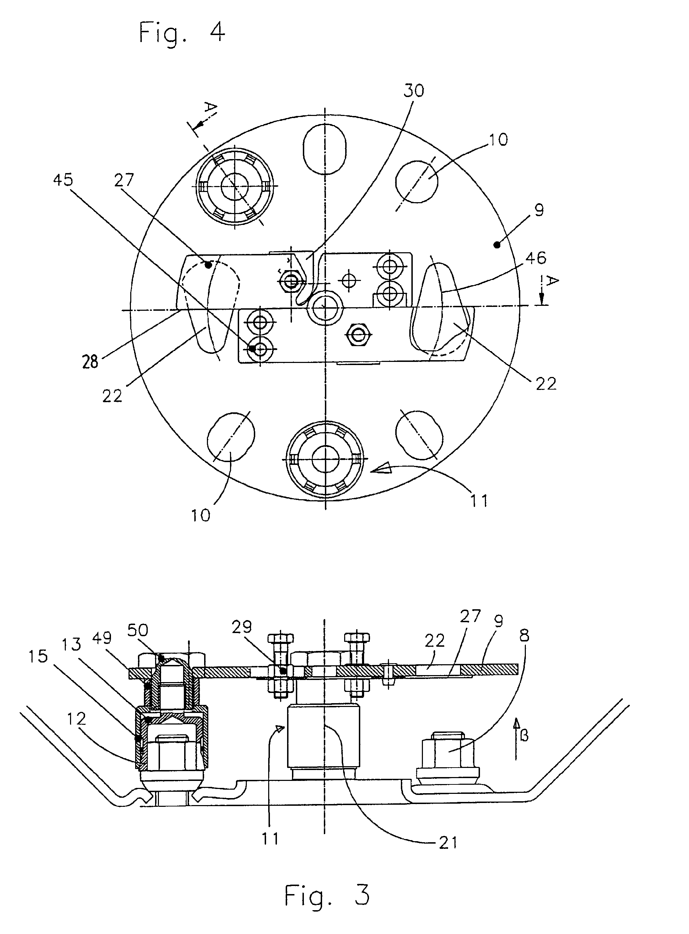

Zur Verbindung der Riegelteile 23 mit der Adapterscheibe 9 sind die Köpfe 24 der Riegelteile 23 in einen ersten Bereich der Öffnung einführbar, wobei der erste Bereich der Öffnung eine lichte Weite aufweist, die größer ist als der Durchmesser des Kopfes 24 des Riegelteils. Durch Verdrehen des Zwischenstücks 25 (in die Richtung entgegen dem Uhrzeigersinn in Fig. 3 gesehen) werden die pilzförmigen Riegelteile in zweite Bereiche der Öffnungen 22 verschoben, in denen die lichten Weiten der Öffnungen kleiner sind als die Durchmesser der Köpfe 24 der Riegelteile 23, so daß die Köpfe 24 die Ränder der Öffnungen 22 in diesen zweiten Bereichen der Öffnungen 22 hintergreifen. Der Hals 20 eines jeweiligen Riegelteils 23 liegt hier jeweils satt am Rand der Öffnung 22 an. Die Längsmittellinie der jeweiligen Öffnung 22, entlang der die beiden Abschnitte der Öffnung 22 liegen, bilden einen Kreisbogen.

Zur Sicherung der Riegelteile in der verriegelten Position (wenn sie sich in den zweiten Bereichen der Öffnungen 22 befinden) sind an der der Radfelge 17 zugewandten Rückseite der Adapterscheibe 9 Blattfedern 27 befestigt. Diese liegen im unbelasteten Zustand an der Adapterscheibe 9 an und überdecken die ersten Bereiche der Öffnungen 22, wobei jeweils ihr einer längsseitiger Rand zwischen dem ersten Bereich und dem zweiten Bereich der Öffnung 22 verläuft. Beim Einführen des Kopfes 24 des Riegelteils 23 in den ersten Bereich der Öffnung 22 wird somit die jeweilige Blattfeder 27 nach unten in Richtung der Radfelge 17verschoben. Nach der Verschiebung des Riegelteils 23 in den zweiten Bereich der Öffnung 22 durch Verdrehung des Zwischenstücks 25 schnappt die Blattfeder zurück in ihre an der Adapterscheibe 9 anliegende Position und sichert somit das im zweiten Bereich der Öffnung 22 sich befindende Riegelteil gegen eine unbeabsichtigte Verschiebung zurück in den ersten Bereich der Öffnung 22 (z. B. beim Rückwärtsfahren). Die Blattfedern 27 sind über Blindniete 45 an der Adapterscheibe 9 befestigt.

Um die Riegelteile 23 wiederum in die ersten Bereiche der Öffnungen 22 zurückverschieben zu können, sind an den Blattfedern 27 Stifte 29 in Form von Schrauben festgelegt, wobei die Schraube durch eine Bohrung in der Blattfeder 27 ragt und die Blattfeder zwischen zwei auf die Schraube aufgeschraubten Muttern liegt. Im Bereich dieser Stifte 29 sind in der Adapterscheibe 9 Ausnehmungen 30 vorgesehen, durch welche die Stifte 29 durch die Adapterscheibe 9 treten. Mittels dieser Stifte 29 sind die Blattfedern 27 von der Adapterscheibe 9 in Richtung der Radfelge 17 abhebbar, worauf das jeweilige Riegelteil 23 in den ersten Bereich der Öffnung 22 verschiebbar ist und durch diesen ersten Bereich der Öffnung aus der Adapterscheibe 9 herausziehbar ist.

Zur Betätigung der Stifte 29 ist eine Druckplatte 31 vorgesehen, die entlang de Arme 26 des Zwischenstücks 25 verschiebbar ist. Zur Verschiebung der Druckplatte 31 ist diese an den vorderen Enden von Verbindungsstiften 33 befestigt, die durch Öffnungen im plattenförmigen Abschnitt 32 des Zwischenstücks 25 treten und deren hintere Enden in einer Trägerscheibe 34 festgelegt sind. Von einer Druckfeder 35 werden der plattenförmige Abschnitt 32 des Zwischenstücks 25 und die Trägerscheibe 34 auf Distanz gehalten. An der Trägerscheibe 34 ist eine Betätigungsscheibe 52 festgeschraubt. Durch Niederdrücken der Betätigungsscheibe 52 in Richtung der Radfelge 17 wird die Druckplatte 31 gegen die Stifte 29 verschoben, wobei die Blattfedern 27 von der Adapterscheibe 9 abgehoben werden und die in den zweiten Abschnitten der Öffnungen 22 festgelegten Riegelteile freigegeben werden. Zum Öffnen der Befestigungseinrichtung wird die niedergedrückte Betätigungsscheibe 34 verdreht, wobei das Zwischenstück 25 ebenfalls verdreht wird und die Riegelteile 23 von den zweiten Bereichen der Öffnungen in die ersten Bereiche der Öffnungen 22 verschoben werden und durch diese aus den Öffnungen herausgezogen werden können.

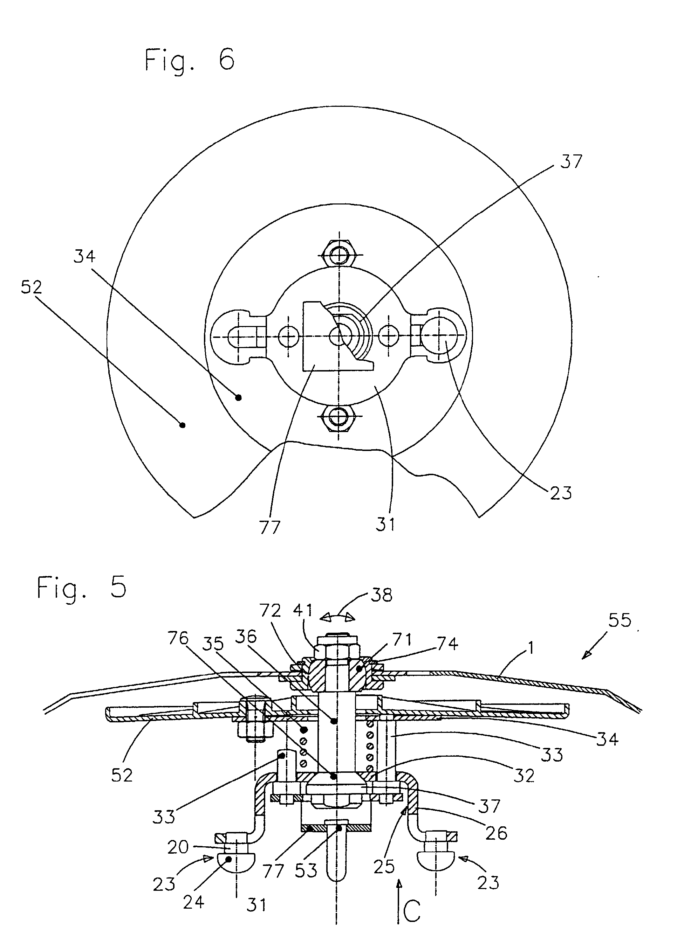

Ein zentraler Bolzen 36 des Kuppelteils 55 steht jeweils über kugelgelenkartige Verbindungen einerseits mit den Armen 1, 2, andererseits über das Zwischenstück 25 mit den beiden Riegelteilen 23 in Verbindung. Ein Verschwenken des zentralen Bolzens 36 in alle Richtungen wird dadurch ermöglicht (angedeutet durch Pfeil 38 in Fig. 5). Zur Ausbildung der kugelgelenkartigen Verbindung zwischen den Armen 1, 2, der Halterung 3 und dem zentralen Bolzen 36 ist ein auf den zentralen Bolzen aufgesteckter Kugelgelenkskopf 71 vorgesehen. Der Bolzen 36 weist hierzu einen Abschnitt mit einem verringerten Durchmesser auf, an dessen freiem Ende ein Gewinde vorgesehen ist. Auf diesen Abschnitt wird der Kugelgelenkskopf 71 aufgeschoben, bis er an der Stufe zum Abschnitt des Bolzens mit dem größeren Durchmesser anliegt. Auf das Gewinde am freien Ende des Abschnitts mit dem verringerten Durchmesser wird die Mutter 41 aufgeschraubt. Auf dem Kugelgelenkskopf 71 ist ein Lagerteil 72 gelagert, welches eine Kugelgelenkpfanne 75 aufweist. Dieses Lagerteil 72 trägt die Arme 1, 2, die zwischen einem nach außen sich erstreckenden, ringförmigen Flansch des Lagerteils 72 und einer auf das Lagerteil 72 geschobenen Scheibe 73 drehbar angeordnet sind, welche durch einen Seegerring 74 gesichert ist. Das Lagerteil 72 mit den Armen 1, 2 ist in alle Richtungen auf dem Kugelgelenkskopf 71 verschwenkbar. Zum Einführen des Kugelkopfes in die Kugelgelenkpfanne 75 weist das Lagerteil 72 an seiner Unterseite zwei seitliche Ausnehmungen 78 der Kugelfläche auf. Der Kugelkopf wird durch diese Ausnehmungen eingeführt, wobei seine Längsachse um 90 ° gegenüber der Längsachse des Lagerteils 72 verkippt ist. Anschließend wird er um 90 ° zurückverkippt, so daß seine Längsachse parallel zur Längsachse des zentralen Bolzens 36 ausgerichtet ist, und in dieser Position auf den Bolzen 36 aufgesteckt und mit der Mutter 41 befestigt.

Im Bereich seines den Armen 1, 2 gegenüberliegenden Endes ist der zentrale Bolzen 36 über eine weitere kugelgelenkartige Verbindung mit dem Zwischenstück 25 verbunden. Dazu weist der Kopf 37 des Bolzens an seiner den Armen 1, 2 zugewandten Rückseite eine kugelschalenförmige Fläche 76 auf, an der der Rand einer zentralen Ausnehmung im plattenförmigen Abschnitt 32 des Zwischenstücks 25 anliegt. Der Rand dieser Öffnung ist hierbei entsprechend an die kugelschalenförmige Fläche 76 angepaßt, um eine reibungsarme Verschwenkung des Bolzens 36 gegenüber dem Zwischenstück 25 zu ermöglichen.

An der Druckplatte 31 ist ein Bügel 77 starr befestigt, der einen Zentrierstift 53 trägt. Bei geschlossener Befestigungseinrichtung ragt dieser durch die zentrale Zentrieröffnung 54 in der Adapterscheibe 9. Durch diesen Zentrierstift wird das Schließen der Befestigungseinrichtung erleichtert und weiters wird die Befestigungseinrichtung zentriert, so daß durch die auftretenden Fliehkräfte sich aufschaukelnde Exzentrizitäten im Betrieb verhindert werden.

Um ein sattes Anziehen der Blattfedern 27 zur Adapterscheibe 9 sicherzustellen, können diese Bereiche magnetisiert werden. Es ist dadurch eine Absicherung gegen das Lösen der beiden Riegelteile 23 gegeben.

Unterschiedliche Modifikationen des gezeigten Ausführungsbeispiel sind denkbar und möglich, ohne den Bereich der Erfindung zu verlassen. Beispielsweise könnte eine andere Anzahl und/oder Form der Öffnungen 22 in der Adapterscheibe vorgesehen sein. Auch die Riegelteile 23 könnten eine andere Form aufweisen, beispielsweise mit einem kugelförmigen Kopf versehen sein.

### Legende zu den Hinweisziffern:

- 1: Arm
- 2: Arm
- 3: Schraube
- 4: Haltelasche
- 5: Gleitschutzmittel
- 6: Armfortsatz
- 7: Abstandsteil
- 8: Radmutter
- 9: Adapterscheibe
- 10: Montageloch
- 11: Klemmkopf
- 12: Klemmfortsatz
- 13: Klemmbuchse
- 14: Spannhülse
- 15: Klemmhülse
- 16: Oberfläche
- 20: Hals
- 17: Radfelge
- 21: Längsachse
- 22: Öffnung
- 23: Riegelteil
- 24: Kopf
- 25: Zwischenstück
- 26: Arm
- 27: Blattfeder
- 28: Rand
- 29: Stift
- 30: Ausnehmung
- 31: Druckplatte
- 32: Abschnitt

- 33: Verbindungsstift
- 34: Trägerscheibe
- 35: Druckfeder
- 36: Bolzen
- 37: Kopf
- 38: Pfeil
- 41: Mutter
- 45: Blindniet
- 46: Längsmittellinie
- 48: Gewindefortsat
- 49: Distanzhülse
- 50: Schraubkopf
- 51: Flansch
- 52: Betätigungsscheibe
- 53: Zentrierstift
- 54: Zentrierbohrung
- 55: Kuppelteil
- 56: Felgenmittelebene
- 71: Kugelgelenkskopf
- 72: Lagerteil
- 73: Scheibe
- 74: Seegerring
- 75: Kugelpfanne
- 76: Fläche
- 77: Bügel
- 78: Ausnehmung
- 83: Kettenstrang
- 84: Vertiefung
- 85: Seitenwand
- 86: Bohrung
- 87: Kettenbefestigungsbolzen
- 88: Lauffläche
- 89: Erhebung
- 90: Ausnehmung
- 91: Querbolzen
- 92: Erhebung
- 93: Teil
- 94: Teil

## Patentansprüche

1. Gleitschutzvorrichtung für Luftreifen aufweisende Kraftfahrzeuge, welche zumindest zwei im montieren Zustand neben der Radfelge angeordnete und winkelig zueinander stehende Arme (1, 2) aufweist, deren freie Enden mit über dem Reifenumfang angeordneten Gleitschutzmitteln (5) in Verbindung stehen und die über eine Befestigungseinrichtung (9, 55) am Rad befestigbar sind, **dadurch gekennzeichnet, daß** die Befestigungseinrichtung eine an mindestens zwei Radschrauben bzw. Radmuttern (8) befestigbare, im wesentlichen flach ausgebildete Adapterscheibe (9) sowie ein an der Adapterscheibe (9) ankuppelbares Kuppelteil (55) aufweist und daß in der Adapterscheibe (9) einerseits zumindest eine Öffnung (22), in die ein am Kuppelteil (55) festgelegtes Riegelteil (23) einführbar und darin festlegbar ist, und andererseits im wesentlichen in der gleichen Ebene wie die mindestens eine Öffnung (22) liegende und in Umfangsrichtung voneinander beabstandete Montagelöcher (10) angeordnet sind, über die die Adapterscheibe (9) mittels Klemmköpfen (11) an den Radschrauben bzw. Radmuttern (8) befestigbar ist.

2. Gleitschutzvorrichtung nach Anspruch 1, **dadurch gekennzeichnet, daß** an der Adapterscheibe (9) mindestens fünf, vorzugsweise mindestens 6, in Umfangrichtung voneinander beabstandete Montagelöcher (10) angeordnet sind.

3. Gleitschutzvorrichtung nach Anspruch 1 oder Anspruch 2, **dadurch gekennzeichnet, daß** die Adapterscheibe (9) den Felgenmittelpunkt überspannt.

4. Gleitschutzvorrichtung nach Anspruch 3, **dadurch gekennzeichnet, daß** die Adapterscheibe (9) eine kreisrunde Umfangskontur aufweist und die zentrale Längsachse (21) der Felge den Mittelpunkt der Adapterscheibe (9) durchsetzt.

5. Gleitschutzvorrichtung nach einem der Ansprüche 1 bis 4, **dadurch gekennzeichnet, daß** das Riegelteil (23) einen vergrößerten, vorzugsweise pilzförmigen oder kugelförmigen, Kopf aufweist und die Öffnung (22) einen ersten Bereich aufweist, in den der Kopf (24) des Riegelteils (23), dessen Durchmesser kleiner ist als die lichte Weite dieses ersten Bereichs der Öffnung (22), einführbar ist, und einen zweiten Bereich aufweist, in den das in die Öffnung (22) eingeführte Riegelteil (23) verschiebbar ist, wobei der Durchmesser des Kopfes (24) des Riegelteils (23) größer ist als die lichte Weite des zweiten Bereichs der Öffnung (22) und der Kopf (24) des Riegelteils (23) den Rand der Öffnung (22) in diesem zweiten Bereich der Öffnung (22) hintergreift.

6. Gleitschutzvorrichtung nach Anspruch 5, **dadurch gekennzeichnet, daß** an der Adapterscheibe (9) auf ihrer der Radfelge (17) zugewandten Rückseite zumindest eine Blattfeder (27) befestigt ist, welche im unbelasteten Zustand an der Adapterscheibe (9) anliegt und den ersten Bereich der Öffnung (22) überdeckt, wobei der eine längsseitige Rand (28) der Blattfeder (27) zwischen dem ersten Bereich und dem zweiten Bereich der Öffnung (22) verläuft und das im zweiten Bereich der Öffnung (22) sich befindende Riegelteil (23) gegen eine unbeabsichtigte Verschiebung in den ersten Bereich der Öffnung (22) sichert.

7. Gleitschutzvorrichtung nach Anspruch 6, **dadurch gekennzeichnet, daß** zum Öffnen der Befestigungseinrichtung an der Blattfeder (27) ein Stift (29) festgelegt ist, der durch eine Ausnehmung (30) in der Adapterscheibe (9) tritt und mittels dem die Blattfeder (27) von der Adapterscheibe (9) abhebbar ist, wobei das Riegelteil (23) in den ersten Bereich der Öffnung (22) verschiebbar ist und aus der Adapterscheibe (9) herausziehbar ist.

8. Gleitschutzvorrichtung nach einem der Ansprüche 1 bis 7, **dadurch gekennzeichnet, daß** in der Adapterscheibe (9) mindestens zwei symmetrisch zur zentralen Längsachse (21) der Radfelge (17) liegende Öffnungen (22) vorgesehen sind.

9. Gleitschutzvorrichtung nach einem der Ansprüche 1 bis 8, **dadurch gekennzeichnet, daß** zumindest eines der Montagelöcher (10) als Langloch ausgebildet ist.

10. Gleitschutzvorrichtung nach einem der Ansprüche 1 bis 9, **dadurch gekennzeichnet, daß** die Kuppeleinrichtung einen zentralen Bolzen (36) umfaßt, auf dem die Arme (1, 2) der Halterung (3) der Gleitschutzvorrichtung gelagert sind.

11. Gleitschutzvorrichtung nach Anspruch 10, **dadurch gekennzeichnet, daß** der zentrale Bolzen (36) über kugelgelenkartige Verbindungen einerseits mit den Armen (1, 2), andererseits mit dem mindestens ein Riegelteil (23) in Verbindung steht.

12. Gleitschutzvorrichtung nach Anspruch 11, **dadurch gekennzeichnet, daß** zur Ausbildung einer kugelgelenkartigen Verbindung zwischen den Armen (1, 2) der Halterung und dem zentralen Bolzen (36) am bzw. auf dem zentralen Bolzen ein Kugelgelenkskopf (71) vorgesehen ist, auf dem ein die Kugelgelenkpfanne (75) aufweisendes Lagerteil (72) gelagert ist, welches die Arme (1, 2) trägt.

13. Gleitschutzvorrichtung nach einem der Ansprüche 11 oder 12, **dadurch gekennzeichnet, daß** der zentrale Bolzen (36) im Bereich seines den Armen (1, 2) gegenüberliegenden Endes über eine kugelgelenkartige Verbindung mit einem Zwischenstück (25) verbunden ist, an welchem das mindestens eine Riegelteil (23) festgelegt ist, wobei vorzugsweise der zentrale Bolzen (36) an seinem den Armen (1, 2) abgewandten Ende einen Kopf (37) aufweist, an dessen den Armen (1, 2) zugewandten Rückseite eine kugelschalenförmige Fläche (76) vorgesehen ist, und an der kugelschalenförmigen Fläche (76) der Rand einer zentralen Öffnung im Zwischenstück (25) anliegt.

14. Gleitschutzvorrichtung nach Anspruch 13, **dadurch gekennzeichnet, daß** das Zwischenstück einen scheibenförmigen Abschnitt (32) aufweist, der die zentrale Öffnung besitzt, durch welche der zentrale Bolzen (36) tritt.

15. Gleitschutzvorrichtung nach Anspruch 14, **dadurch gekennzeichnet, daß** zwischen parallelen, in Richtung zur Radfelge verlaufenden Armen (26) des Zwischenstücks (25) eine Druckplatte (31) verschiebbar gelagert ist, die an den Enden von durch Öffnungen im scheibenförmigen Abschnitt (32) des Zwischenstücks tretenden Verbindungsstiften (33) angebracht ist, wobei an den gegenüberliegenden Enden der Verbindungsstifte eine Trägerscheibe (34) befestigt ist, die in drehfester Verbindung mit dem Zwischenstück (25) bzw. den am Zwischenstück (25) angebrachten Riegelteilen (23) steht.

16. Gleitschutzvorrichtung nach Anspruch 15, **dadurch gekennzeichnet, daß** zwischen dem scheibenförmigen Abschnitt (32) des Zwischenstücks und der Betätigungsscheibe (34) eine Druckfeder angeordnet ist.

17. Gleitschutzvorrichtung nach Anspruch 15 oder Anspruch 16, **dadurch gekennzeichnet, daß** die Druckplatte (31) mit einem in Richtung zur Radfelge sich erstreckenden Zentrierstift (53) starr verbunden ist, der bei geschlossener Kuppeleinrichtung durch eine zentrale Zentrierbohrung in der Adapterscheibe (9) ragt.

18. Gleitschutzvorrichtung nach einem der Ansprüche 1 bis 17, **dadurch gekennzeichnet, daß** zumindest ein umfangsgeschlossener, endloser Kettenstrang (83) vorgesehen ist, der um die Lauffläche (88) des Reifens verläuft, wobei der Kettenstrang (83) jeweils in einer Vertiefung (84) der Haltelasche (4) über die Haltelasche (4) geführt ist und an der Haltelasche (4) befestigt ist, wobei in den Seitenwänden (85) der Vertiefungen (84) Bohrungen (86) vorgesehen sind, von denen Kettenbefestigungsbolzen (87) aufgenommen sind, die im wesentlichen parallel zur Lauffläche (88) liegen und jeweils ein Kettenglied durchsetzen.

19. Gleitschutzvorrichtung nach einem der Ansprüche 1 bis 18, **dadurch gekennzeichnet, daß** an der Haltelasche (4) im Abschnitt, in welchem sie auf der Lauffläche (88) des Reifens aufliegt, auf der der Lauffläche (88) abgewandten Außenseite noppenartige Erhebungen (89) vorgesehen sind.

20. Gleitschutzvorrichtung nach einem der Ansprüche 1 bis 19, **dadurch gekennzeichnet, daß** ein Klemmkopf (11) eine Klemmbuchse (13) aufweist, an deren Vorderseite Klemmfortsätze (12) mit einer konisch bzw. keilförmig nach außen verlaufenden Außenfläche angeordnet sind, an welchen eine die Klemmbuchse (13) und die Klemmfortsätze (12) außen umgebende Klemmhülse (15) anliegt, wobei an der Rückseite der Klemmbuchse (13) ein Gewindefortsatz (48) festgelegt ist, der vorzugsweise ein Außengewinde aufweist, wobei auf dem Gewindefortsatz (48) eine Spannhülse (14) aufschraubbar ist, die vorzugsweise ein Innengewinde aufweist und über welche die Klemmhülse (15) nach vorne und gegen die konischen Außenflächen der Klemmfortsätze verschiebbar ist.

21. Gleitschutzvorrichtung nach Anspruch 20, **dadurch gekennzeichnet, daß** zwischen einem Schraubkopf (50) der Spannhülse (14) und der Rückseite der Klemmbuchse (13), die an ihrer Rückseite vorzugsweise mit einem nach innen abstehenden, ringförmigen Flansch (51) versehen ist, eine die Spannhülse (14) umgebende Distanzhülse (49) einlegbar ist.

22. Gleitschutzvorrichtung nach einem der Ansprüche 1 bis 21, **dadurch gekennzeichnet, daß** die Arme (1, 2) mehrteilig ausgebildet sind mit einem zentralen Teil (93) und einem Endteil (94), wobei die Teile einen überlappenden Abschnitt aufweisen, der mit Bohrungen versehen ist, die zum Teil von Schrauben (3) oder Nieten durchsetzt werden, wobei die Länge der Arme (1, 2) durch Veränderung des sich überlappenden Bereichs der Teile (93, 94) der Arme veränderbar ist.
